(19)

Europäisches
Patentamt
European
Patent Office
Office européen
des brevets

(11)  **EP 4 542 183 A1**

(12)  **EUROPEAN PATENT APPLICATION**

(43) Date of publication:
**23.04.2025  Bulletin 2025/17**

(21) Application number: **24150466.1**

(22) Date of filing: **05.01.2024**

(51) International Patent Classification (IPC):
**G01H 1/00** *(2006.01)*      **G01H 1/12** *(2006.01)*
**G01M 13/028** *(2019.01)*

(52) Cooperative Patent Classification (CPC):
**G01H 1/003; G01M 13/021; G01M 13/028;
G01M 13/045;** G01H 1/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **20.10.2023  PL 44643723**

(71) Applicant: **Akademia Gorniczo-Hutnicza im.
Stanislawa
Staszica w Krakowie
30-059 Krakow (PL)**

(72) Inventor: **JAB ONSKI, Adam
32-086 Bosutów (PL)**

(74) Representative: **Wlasienko, Jozef et al
Polservice
Kancelaria Rzeczników
Patentowych Sp. z o.o.
UI. Bluszczanska 73
00-712 Warszawa (PL)**

(54)  **METHOD OF AUTOMATIC TECHNICAL DIAGNOSIS OF ROTATING MACHINES**

(57)    The subject matter of the invention relates to a method for the automatic technical diagnosis of rotating machines, including detection of faults in rotating machines, in particular vibration measurements of rotating machines by the automatic detection of changes in the signals of machine vibration.

The method consists in that monitoring and diagnosis are performed in terms of identifying both the assemblies or parts of an object of the rotating machine subjected to the diagnosis, in such a way that vibration data are recorded in the form of a vibration signal from at least one vibration sensor (2) mounted on the housing of the mechanical elements of the rotating machine (1), wherein each subsequent vibration signal is recorded at the same length and at the same sampling frequency. Then, collected vibration signals are processed in a vibration data acquisition unit (3) equipped with a reductive-redundant mechanism (4) by means of which the vibration signal is modified by calculating the values of spectral components in the domain of frequency or orders and the values are segmented relative to subsequent tested spectral resolutions on the basis of current scale of class intervals. Then, an averaged spectrum is calculated and added to the state matrix and a statistical measure of the comparison of spectral amplitudes is calculated for individual class intervals at the standard score measure and the procedure is repeated for each tested spectral resolution in the range from the value equal to the inverse of the vibration signal length to half the sampling frequency. Finally, the results of the vibration growth index are saved, then are sorted from the highest to the lowest value thus allowing the potential occurrence of a fault to be determined in terms of identifying both a specific assembly or part of the rotating machine (1).

FIG. 1

## Description

## FIELD OF THE INVENTION

The subject matter of the invention relates to a method for the automatic technical diagnosis of rotating machines, including detection of faults in rotating machines, in particular vibration measurements relating to rotating machines by the automatic detection of changes in the signals of machine vibration.

The solution according to the invention generally relates to the measurement of mechanical vibrations, in particular the measurement of vibrations transverse to the direction of their propagation in solids, especially in vibrating machines, using direct conductance to a sensor detecting such vibrations, including data processing, specially adapted for specific functions.

## BACKGROUND OF THE INVENTION

A key element for increasing the efficiency of modern machinery are all kinds of methods for the diagnosis of machines enabling non-invasive collection of information about their technical condition. Machine condition monitoring is a very important aspect that is aimed at increasing operation reliability and leads to detecting and defining various diagnostic and reliability relations that provide a basis for conclusions about their current technical condition.

Every technical product will eventually fail. The failure of a component or a subassembly often results in the failure of the entire system. Such failures pose a threat to safety. Basically, failures can be attributed to a number of fault mechanisms, such as fatigue, corrosion and buckling. A method or device for predicting the failure of a system, component or subassembly would enable the timely repair, replacement or withdrawal of system components prior to the actual failure thereby reducing the negative consequences of component or subassembly failure.

The types of measurements that provide information about important (from the operation and reliability point of view) operating parameters of individual machines depend on the design of those machines and their operating conditions. Regardless of the design, diagnostic methods, i.e. methods enabling the diagnosis of an object's technical condition on the basis of changes in its operating parameters can be divided, depending on those parameters, into:

- methods based on the measurement of vibrations in motion nodes;
- methods for measuring temperature changes in cooperating components;
- methods for measuring the condition of lubricating liquid and impurities contained therein.

The solution according to the invention focuses on the first aspect, namely, on the method for measuring vibrations. The assessment of machine condition which involves the qualitative determination of the technical condition of a machine is carried out by analysing the measured vibration values, including the operating parameters.

## DESCRIPTION OF THE PRIOR ART

In the prior art there are known applications disclosing a system for the assessment of the technical condition of rotating machines. There is known the US patent application No. US20120022805A1 titled "Mechanical health monitor apparatus and method of operation therefor", the solution of which is based on the analysis of the dynamic models of state space using features of the probability density distribution function of stochastic vibration signals. There is also known the US patent application No. US2003042861A1 titled "System and method for predicting mechanical failures in machinery driven by an induction motor", the solution of which is based on the comparison of current values of induction motor torque with pre-determined reference values.

In contrast to the prior art presented above, in the proposed solution according to the invention there is no need to determine reference values, which significantly distinguishes this solution from those in the prior art and represents a significant simplification in relation to the prior art defined above.

Furthermore, in the prior art there is known the international patent application No. WO2008049167A1 titled: "Diagnostic system, method and apparatus for rotary machinery" which discloses a method for detecting failures of a rotating machine by the analysis of the drive shaft position determined on the basis of two simultaneous measurements of relative vibration. The subject solution discloses diagnostic systems and methods for rotating machines comprising a shaft in at least one bearing. The system comprises at least one pair of orthogonally mounted proximity sensors for measuring a proximity of the shaft to the bearing, a processor coupled to the proximity sensors and an output device coupled to the processor. The processor extracts a mean position of the shaft and a dynamic path of the shaft in the bearing from signals received from the proximity sensors and models at least a mean position of the shaft in the bearing. The output device represents the measured mean position of the shaft, the measured dynamic path of the shaft and the modelled mean position of the shaft in combination in a single image.

In the prior art there is also known the European patent No. EP1014054B1 titled: "Method for model-based diagnostic vibration monitoring of rotating machines", which discloses a method for the automatic assessment of the technical condition of a rotating machine which uses an analytical model of machine vibration signals, the parameters of which are calculated on the basis of reference measurements. Significant changes in the technical condition of a machine are determined by assessing relative variance between the measured oscillation data and the data predicted by means of the model. The method consists in measuring and recording oscillation values and operating parameters in the learning phase and creating the model in several stages. At the final phase of the operation, actual oscillation values and operational parameters are detected and significant changes are introduced in the machine condition by assessing relative variance between the measured and predicted oscillation data.

Moreover, in the prior art there is known a solution of VibroBox® company that enables an automatic technical diagnosis of rotating machines. The solution offers a system that uses a Support Vector Machine (SVM), neural networks and wavelet transform for the assessment of the technical condition. However, as the system documentation indicates, the system offers a system configuration on the basis of historical data learning sets. Moreover, the system requires advanced signal processing modules adapted to operate in a cloud environment. Additionally, the VibroBox® system is based on very large historical datasets, which represents a different approach than that in the solution according to the invention, because the invention is based on a single instance of deterioration of the technical condition of the examined object of the machine.

In the prior art there is also known the SmartCBM™ system of Allied Reliability® company, which is a solution that combines the principles of the Industrial Internet of Things (IIoT) with expert knowledge about the process in which machines are involved. Or a solution of SKF® company that promotes the automation of technical diagnosis as part of the integration of the Multilog IMx-M™ series system with the IIoT environment. This concerns likewise, the VibGuard™ platform of Pruftechnik® company. Some of other European providers of systems for technical diagnosis, such as Danish company Grahm & Juhl, mainly known for its TCM® M-System Mark II platform, are developing towards less expensive (less functional) devices, such as TCM® M-System Mi.

Finally, in the prior art there is also known the scientific publication titled "Vibration Fault Diagnosis in Wind Turbines Based on Automated Feature Learning" (2022) by Angela Meyer, which describes methods for the automatic detection of faults in rotating machines based on the analysis of a set of vibration signals. The publication presents a method for detecting anomalies by classifying features extracted from the time-frequency representation of vibration signals using Convolutional Neural Networks. The method shown does not require prior configuration of frequency bands; however, it requires training data which represent both the condition of correct operation of a machine and a particular type of fault to be monitored, which is not required in the solution according to the invention.

The above-described prior art solutions or, more broadly, solutions concerning methods based on the measurement of vibrations basically require verification of methods on individual machines, especially in situations where a learning set is used (machine learning methods). Unfortunately, the data obtained relate only to an unrepeatable case. Moreover, one disadvantage of the above indicated prior-art solutions operating on training sets is the assumption of invariability of modal parameters during subsequent assemblies of a machine. Additionally, some of the solutions use the a priori defined diagnostic features, which narrows down the list of faults at the level of both detection (time/angle analyses) and identification (narrowband spectral analyses). In the proposed solution according to the invention, on the other hand, the entire frequency band of each vibration signal is analysed within a time window corresponding to a single failure development, i.e. such one in which a possible change in the modal parameters of an object is related exclusively to the change in the technical condition of the object.

Therefore, it is the intention of this invention to overcome these shortcomings of the prior art, and more specifically, to overcome specific limitations in this respect, and thus to make it possible to assess the technical condition of an object subjected to the diagnosis without the necessity to construct a kinetostatic model of the drive system of the machine, which, in the existing prior art solutions, is necessary to determine the characteristic frequencies of the individual elements of the drive system, thus significantly reducing the configuration time of the diagnostic system.

Considering the fact that there are no a priori configured frequency bands, the solution according to the invention also makes it possible to detect faults manifested in an increase of the energy/power of spectral components in ranges other than those defined during configuration and thus the solution according to the invention can also be used for detecting anomalies in vibration signals as part of the assessment the technical condition of rotating machines, related, for example, to a change in the amplitude-frequency characteristics of the frequency response of the system after a change in the dynamic parameters of the machine or as a result of specific operating conditions causing untypical changes in the vibration signals. Due to the use of a reductive-redundant data processing mechanism, the solution according to the invention does not require using a set of reference data describing the condition of proper operation of the machine to indicate the faulty state of the machine.

## SUMMARY OF THE INVENTION

The object of the invention is to develop a totally new solution in the form of a method for the automatic technical diagnosis of rotating machines, including detection of faults in rotating machines, in particular vibration measurements relating to rotating machines by the automatic detection of changes in the signals of machine vibration, especially rotating machines whose drive system comprises shafts, toothed gears and rolling-element bearings, and whose rotational speed is in the range of 600 rpm to 30 000 rpm.

The purpose of the proposed method is to provide reductive-redundant processing of vibration signals to be used for the automatic (i.e. unsupervised) assessment of the technical condition of rotating machines. The subject solution according to the invention is designed in particular for the diagnosis of rotating machines based on the measurement of absolute vibration, especially measurements of vibration acceleration using accelerometers, both piezoelectric and those made in MEMS technology.

Importantly, in the case of the claimed solution the key point is that the processing of a vibration data set with the use of the reductive-redundant mechanism is not necessarily in the form of continuous vibration signals originating from the object subjected to diagnosis.

The solution according to the invention is therefore intended to make it possible to effectively carry out the task of unsupervised technical diagnosis of rotating machines by the analysis of vibration signals. In light of the aforesaid, the purpose of the invention relates to a configuration-free automated detection of a fault (i.e. deterioration of the technical condition) in a rotating machine and identification of the frequency band/orders in which an increase in vibration caused by that fault is manifested.

The essence of the invention is defined by a method for the automatic technical diagnosis of rotating machines, including detection of faults in rotating machines, in particular vibration measurements of rotating machines by the automatic detection of changes in the signals of machine vibration according to claim 1. Dependent claims 2-7 relate to individual embodiments of the invention according to claim 1.

In order to achieve the above purposes, according to one aspect of the invention, the invention provides a method for the automatic technical diagnosis of rotating machines consisting in that monitoring and diagnosis are performed in terms of identifying both the assemblies or parts of an object of the rotating machine subjected to the diagnosis, in such a way that vibration data are recorded in the form of a vibration signal from at least one vibration sensor mounted on the housing of the mechanical elements of the rotating machine, characterized in that each subsequent vibration signal is recorded at the same length and at the same sampling frequency, and then the collected vibration signals are processed in a vibration data acquisition unit equipped with a reductive-redundant mechanism by means of which the vibration signal is modified by calculating the values of spectrum components in the domain of frequency or orders and the values are segmented relative to the subsequent tested spectral resolutions on the basis of current scale of class intervals, and then an averaged spectrum is calculated and added to the state matrix and a statistical measure of the comparison of spectral amplitudes is calculated for individual class intervals at the standard score measure and the procedure is repeated for each tested spectral resolution in the range from the value equal to the inverse of the vibration signal length to half the sampling frequency, after which the results of the vibration growth index are saved, then are sorted from the highest to the lowest value thus allowing the potential occurrence of a fault to be determined in terms of identifying both a specific assembly or part of the rotating machine.

Preferably, the said vibration signal from the vibration sensor is a signal of digital acceleration of vibrations with the use of accelerometers, both piezoelectric and those made in MEMS technology.

Preferably, the said single vibration signal from the vibration sensor has a length in the time interval of 1s to 20s, at the sampling frequency in the frequency range of 20 kHz to 50 kHz.

Preferably, the said subsequent segments of fragments of vibration signals from the vibration sensor are also converted into the envelope signal form, both in the frequency domain and in the order domain.

Preferably, the said vibration signals are recorded using vibration sensors whose linear vibration transmission bandwidth is at least 10 kHz and is greater than the safe frequency range resulting from the sampling frequency, which is at least 8 kHz.

Preferably, together with the vibration data, the phase marker signal is recorded enabling an additional analysis in order domain for resampled signals by means of the vibration data acquisition unit equipped with the reductive-redundant mechanism.

Preferably, during registration of vibration data in the form of vibration signals, the rotating machine operates with stable operating parameters, in particular with stable rotational speed, whose fluctuations are not more than 2%, and with stable load, whose fluctuations are not more than 2%, wherein for the signals recorded together with the phase marker, it is preferable that the rotational speed fluctuation is not more than 5%.

The solution provided according to the aspect proposed above enables easier implementation of the Condition Monitoring System (CMS) in rotating machines due to the shortened configuration process of the monitoring system relative to the prior art solutions existing on the market and due to the fact that it is not necessary to construct a kinetostatic model, which may require manual measurements of geometric parameters of elements of machines.

Furthermore, the solution according to the invention makes it possible to increase the effectiveness of the technical diagnosis of rotating machines, because it enables detection of faults manifested in an increase in the amplitudes of anomalous components, i.e. components which do not result directly from the kinetostatic model of the machine subjected to diagnosis.

What is more, the solution according to the invention makes it possible to change the range of data to be analysed by deleting selected vibration waveforms.

Another advantage of the proposed solution according to the invention is that it is possible to automatically analyse indicated results by sorting them according to a defined key. For example, if the analysis uses the gradient of a straight line for individual class intervals, the results can be easily sorted from the highest to the lowest, thus indicating the relative significance level of subsequent spectral bands indicated.

Moreover, it is an advantage of the claimed solution according to the invention concerning a method for assessing the technical condition that it is possible to establish a threshold value for a given indicator, below which the results can be considered irrelevant.

## BRIEF DESCRIPTION OF THE DRAWINGS

The subject matter of the invention is presented in the embodiment in relations to the appended drawings, in which:

FIG. 1    shows a schematic functional diagram of the method according to the embodiment of the invention;

FIG. 2    shows a graph illustrating three typical phases of the assessment of the technical condition of rotating machines in a scenario with a single time window of a fault in accordance with the method according to the embodiment of the invention;

FIG. 3    shows a schematic diagram of carrying out the method according to the embodiment of the invention;

FIG. 4    shows result formats in the form of a graph of the carried-out method according to the embodiment of the invention;

## DETAILED DESCRIPTION OF THE INVENTION

The subject matter of the invention is described in detail below with reference to the appended figures and embodiments. The invention is not limited only to the detailed embodiments described herein.

A person skilled in the art will appreciate that some aspects of the embodiments may be carried out as a method or a software product. Accordingly, the embodiments may have a form of an all-hardware embodiment, an all-software embodiment (including firmware, resident software, microcode, etc.) as a "circuit", a "module" or a "system".

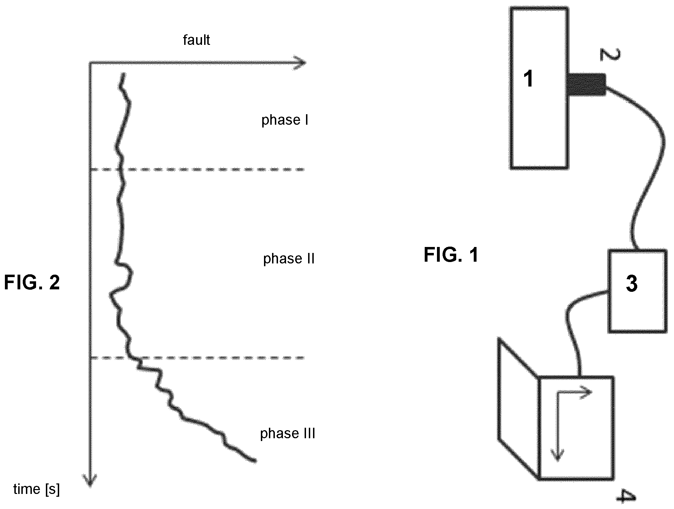

The method for the automatic technical diagnosis of rotating machines, including detection of faults in rotating machines, in particular vibration measurements related to rotating machines by the automatic detection of changes in the signals of machine vibration is illustrated in the **FIGURES,** from **FIG. 1** to **FIG. 4.**

**FIG. 1** shows a schematic functional diagram of the method for the automatic technical diagnosis of a rotating machine 1, which rotating machine 1 in this embodiment has a drive system and it further comprises a shaft, toothed gears and rolling-element bearings. On the housing of the mechanical elements of the rotating machine 1 there is mounted a vibration sensor 2 which processes vibration data recorded from the housing of the rotating elements of the machine 1. The data recorded from the rotating machine 1 goes into the vibration data acquisition unit 3 which makes the data available and on which unit the reductive-redundant mechanism 4 operates. The result of carrying out the solution according to the invention is in a digital format produced by the same vibration data acquisition unit 3, with the data in the form of separate vibration waveforms being available in a digital form on a computer medium as a one set.

In the embodiment carried out there is one vibration sensor 2 mounted nearest to the source of a potential fault of a rotating element of the rotating machine 1 by means of screw fastening using the torque specified in the data sheet of the vibration sensor 2. In this specific embodiment, the vibration sensor 2 is placed on the input shaft of the drive system and generates a reference signal of the rotational speed in the form of a given number of pulses per 1 revolution of the shaft, which is used for the transition from the frequency domain to the order domain.

The said vibration sensor 2 is used for recording vibration signals whose linear vibration transmission bandwidth is greater than the frequency range resulting from the sampling frequency. In this case, the linear vibration transmission bandwidth is 12 kHz, with the minimum value of 10 kHz, and is greater than the frequency range which is 10 kHz, with the minimum value of 8 kHz.

The said vibration signal is a signal of the digital acceleration of vibrations with the use of accelerometers, both piezoelectric and made in MEMS technology. A single vibration signal from the vibration sensor 2 has a length in the time range of 1s to 20s, at the sampling frequency in the frequency range of 20 kHz to 50 kHz. For example, in the case the sampling frequency is in the frequency range of 1 kHz to 8 kHz, the solution according to the invention may not be effective for detecting faults in the rolling-element bearings of rotating machines 1 due to the possibility of insufficient recording of induced structural frequencies of the object subjected to diagnosis.

Each subsequent vibration signal is recorded at the same length and the same sampling frequency. Collected vibration signals are processed in the above-mentioned vibration data acquisition unit 3 equipped with the reductive-redundant mechanism 4. Then the vibration signals are subjected to modification by calculating the values of spectral components in the frequency or order domain and are segmented in regard to subsequently tested spectral resolutions on the basis of current division of class intervals. After that the averaged spectrum is calculated and added to the state matrix and a statistical measure for the comparison of spectral amplitudes is calculated for individual class intervals at the standard score measure, in this case the value of the direction coefficient of a straight line and (as a second exemplary index) the z-score statistical measurement, and the procedure is repeated for each tested spectral resolution in the range from the value equal to the inverse of vibration signal length to half the sampling frequency. Finally, the results of the vibration growth index are saved and then are sorted from the highest to the lowest value, allowing the potential occurrence of fault to be determined in terms of identifying both a specific assembly or part of the rotating machine 1.

**FIG. 2** shows a graph illustrating three typical phases of the assessment of the technical condition of a rotating machine 1 in a scenario with a single time window of a fault of a rotating element of the rotating machine 1 in accordance with the method according to the embodiment of the invention. In phase I, reference values are determined for the rotating machine 1 in a correct operation mode. Phase II is the monitoring of the rotating machine 1 operating in the correct operation mode. Phase III is the detection of a fault of a rotating element of the rotating machine 1. Due to the use of the reductive-redundant mechanism, the solution according to the invention does not require manual indication of the end of phase I. Technical diagnosis consists in indicating the point of time at which the fault develops, i.e. the boundary between phase II and phase III, and indicating the rate of fault development, i.e. the parameter describing the nature of phase III. In the proposed approach, both these tasks are combined into one purpose in such a way that, for a greater number of data describing the fault relative to the number of data corresponding to phase I, the index value increases and thus the effectiveness of the solution increases with the deterioration in the technical condition of the machine. The proposed solution does not apply to the machine break-in phase, which takes place in the case of new (sometimes also repaired) machines before phase I marked in FIG.2, and in which power drops in some spectral components may occur.

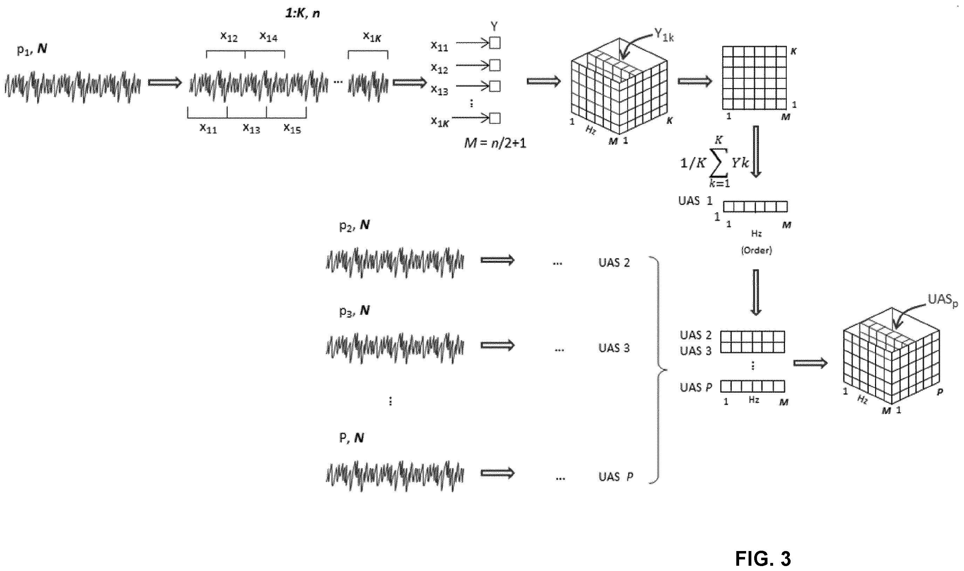

**FIG. 3** shows a schematic diagram of carrying out the method according to the invention, which method involves a reductive-redundant change in the spectral resolution of a set $P$ of different vibration waveforms, resulting from the number of fragments $K$ of a waveform $p$, into which waveform $p$ is divided thus obtaining $n$ points in each of the subsequent fragments $k$, enabling simultaneous detection of changes in narrowband deterministic components, broadband structural components, and harmonic and cyclostationary components of second order (analysed in the envelope spectrum). After each subsequent vibration signal $p$, which is recorded, the system performs current calculations and updates the dynamic matrix of the system condition in the form of an UAS (*User-Averaged Spectrum*) periodogram calculated as an average of amplitudes $K$ of spectra (from a given waveform $p$), each having $M$ number of points, determined as half the amount $n$ of points in a fragment plus 1 and spectral amplitudes stored as $Y$, which matrix subsequently goes through a standard separation algorithm for subsequent values $1$-$M$ in the direction determined by $1$-$p$. Then, subsequent values of the class interval which are in the positive group (*lim* value) are combined into one distribution series, for which a standard statistical measure is determined. In this way, a previously unknown spectral vector $W$ with a non-monotonically variable resolution is obtained each time. The values of the statistical measures together with the corresponding distribution series are saved. The procedure is repeated for each defined spectral resolution. After the last UAS for $k = K$, spectral vector $W$ is sorted in a descending manner together with the distribution series, and thus information is obtained about the greatest spectral change in the time-frequency (or time-angle) domain together with information about the frequency/order band, whose accuracy depends of the length of the recorded waveforms $p$ and the distribution index $K$, which is a new solution compared to the existing solutions because obtaining such results would require configuration of the spectral analysis in a band that cannot be known a priori.

The values of vector W for subsequent class intervals are obtained by calculations for subsequent columns of the matrix:

$$Y(m) = [Y_1(m) \ Y_2(m) \ \ Y_3(m) \ ... \ \ Y_P(m)]$$

calculated as:

$$\hat{Y}(f) = \frac{\Delta t}{M} \sum_{m=0}^{M-1} x_m e^{-j2\pi f \Delta t m}$$

for $-1/2 \ \Delta t < f \le 1/2 \Delta t$,
and then the combination of matrix columns according to.:

$$\bigwedge_{w \in W \ \& \ w_i - w_{i+1} < lim} : w_i = k_i, w_{i+1} = k_i$$

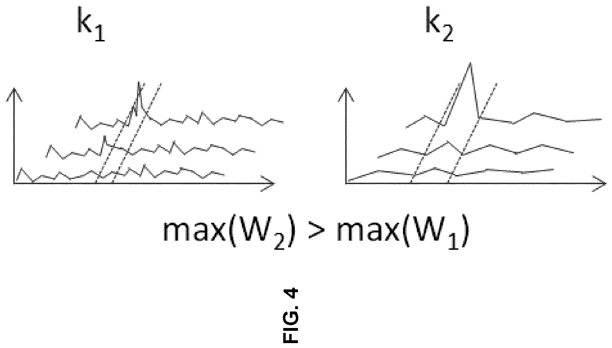

Finally, **FIG. 4** shows the resultant formats in the form of a graph of the carried out method according to the embodiment of the invention, which illustrate the reductive-redundant formation of the UAS matrix shown in **FIG. 3** as the function of changing spectral resolution resulting from parameter $K$. For a single class interval $W$, in the case of resolution resulting from the window $k1$, the value of the statistical index is lower than for the resolution defined by the window $k2$, for which subsequent distribution series formed one common class interval comprising each subsequent distribution series, in which an increase in the values of spectral components in time occurs for the given statistical measure, by a dynamic division of the spectral axis based on the data analysis. In this way, based on the values of selected sorted statistical index, the solution according to the invention indicates the same spectral band (of frequencies or orders) and the same type of spectrum, in which the greatest increase in the examined time interval is observed. Since an index value is available for each indicated interval, a ranking list of bands in finally obtained in relation to the criterion of significance of increases, which are typically related to the degree of fault development in a rotating machine 1.

The above description of presented embodiments has been provided in order to enable any person skilled in the art to carry out or use the invention. Various modifications of the embodiments presented are also possible, comprising all such changes, modifications and variants that fall within essence and scope of the appended claims. The basic principles set out herein may therefore be applied in other embodiments without going beyond the scope of the invention. Thus, the invention is not intended to be limited to the embodiments presented herein but to accord with the broadest scope consistent with the principles and novel features set out herein.

The solution according to the invention thus offers, with the use of the above-mentioned technical means as indicated in the description and in the Figures, a method for the automatic technical diagnosis of rotating machines, including detection of faults in rotating machines, in particular vibration measurements of vibrating machines by the automatic detection of changes in the vibration signals of a rotating machine.

## APPLICATION OF THE INVENTION

The invention can be broadly applied in the technical diagnosis of rotating machines operating in a continuous mode in unchanging operating conditions, for which the frequency distribution and amplitudes of vibration signals components do not change during operation in the same technical condition, i.e. they are not changed under the influence of the amplitude-frequency characteristics of the frequency response of the system as a result of a change in the operating parameters of the machine.

The solution according to the invention can be used in all applications where an assessment of the technical condition of rotating machines, such as ventilators, pumps or auxiliary servo motors, is required. The data recorded with the indicated parameters enable detection of shaft faults, including unbalance, misalignment and foundation backlashes, toothed gears, including local faults of toothed wheels and dispersed operational faults as well as local and dispersed faults of rolling-element bearings.

## LIST OF REFERENCE NUMBERS

[0051]

1    rotating machine
2    vibration sensor
3    vibration data acquisition unit
4    reductive-redundant mechanism

## Claims

1.   A method for the automatic technical diagnosis of rotating machines consisting in that monitoring and diagnosis are performed in terms of identifying both the subassemblies or parts of an object of the rotating machine subjected to the diagnosis, in such a way that vibration data are recorded in the form of a vibration signal from at least one vibration sensor (2) mounted on the housing of the mechanical elements of the rotating machine (1), **characterized in that** each subsequent vibration signal is recorded at the same length and at the same sampling frequency, and then collected vibration signals are processed in a vibration data acquisition unit (3) equipped with a reductive-redundant mechanism (4) by means of which the vibration signal is modified by calculating the values of spectral components in the domain of frequency or orders and the values are segmented relative to subsequent tested spectral resolutions on the basis of current division/scale of class intervals, and then an averaged spectrum is calculated and added to the state matrix and a statistical measure of the comparison of spectral amplitudes is calculated for individual class intervals at the standard score measure and the procedure is repeated for each tested spectral resolution in the range from the value equal to the inverse of the vibration signal length to half the sampling frequency, after which the results of the vibration growth index are saved, then are sorted from the highest to the lowest value thus allowing the potential occurrence of a fault to be determined in terms of identifying both a specific assembly or part of the rotating machine (1).

2.   The method according to claim 1, **characterized in that** the vibration signal from the vibration sensor (2) is a signal of digital acceleration of vibrations with the use of accelerometers, both piezoelectric and those made in MEMS technology.

3.   The method according to claim 1 or 2, **characterized in that** the single vibration signal from the vibration sensor (2) has a length in the time interval of 1s to 20s, at the sampling frequency in the frequency range of 20 kHz to 50 kHz.

4.   The method according to claim 1 or 3, **characterized in that** subsequent segments of fragments of vibration signals from the vibration sensor (2) are also converted into the envelope signal form, both in the frequency domain and in the order domain.

5.  The method according to claim 1 or 4, **characterized in that** vibration signals are recorded using vibration sensors (2) whose linear vibration transmission bandwidth is at least 10 kHz and is greater than the safe frequency range resulting from the sampling frequency, which is at least 8 kHz.

6.  The method according to claim 1, **characterized in that**, together with the vibration data, the phase marker signal is recorded enabling an additional analysis in the order domain for resampled signals by means of the vibration data acquisition unit (3) equipped with the reductive-redundant mechanism (4).

7.  The method according to claim 1 or 6, **characterized in that,** during registration of vibration data in the form of vibration signals, the rotating machine (1) preferably operates with stable operating parameters, in particular with stable rotational speed, whose fluctuations are not more than 2%, and stable load, whose fluctuations are not more than 2%, wherein, for the signals recorded together with the phase marker, it is preferable that the rotational speed fluctuation is not more than 5%.

FIG. 1

FIG. 2

phase I

phase II

phase III

fault

time [s]

FIG. 3

$$\max(W_2) > \max(W_1)$$

FIG. 4

Europäisches
Patentamt

European
Patent Office

Office européen
des brevets

# EUROPEAN SEARCH REPORT

**Application Number**

EP 24 15 0466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CIABATTONI LUCIO ET AL: "Statistical Spectral Analysis for Fault Diagnosis of Rotating Machines", IEEE TRANSACTIONS ON INDUSTRIAL ELECTRONICS, IEEE SERVICE CENTER, PISCATAWAY, NJ, USA, vol. 65, no. 5, 1 May 2018 (2018-05-01), pages 4301-4310, XP011676048, ISSN: 0278-0046, DOI: 10.1109/TIE.2017.2762623 [retrieved on 2018-01-16] * abstract * * paragraphs [00I.] - [00V.], [VI.A] - [VI.C] * | 1-7 | INV. G01H1/00 ADD. G01H1/12 G01M13/028 |
| X | US 2012/035885 A1 (TARASSENKO LIONEL [GB] ET AL) 9 February 2012 (2012-02-09) * paragraph [0048] * * paragraph [0050] - paragraph [0054] * * paragraph [0055] - paragraph [0061] * * paragraph [0063] - paragraph [0065] * | 1-7 | |
| X | ATTA MOHAMED ESAM EL-DINE ET AL: "Detection and Diagnosis of Bearing Faults Under Fixed and Time-Varying Speed Conditions Using Persistence Spectrum and Multi-Scale Structural Similarity Index", IEEE SENSORS JOURNAL, IEEE, USA, vol. 22, no. 3, 30 December 2021 (2021-12-30), pages 2637-2646, XP011899502, ISSN: 1530-437X, DOI: 10.1109/JSEN.2021.3139560 [retrieved on 2022-01-28] * abstract * * paragraphs [0II.] - [0IV.], [0V.A], [0V.B] * | 1-7 | **TECHNICAL FIELDS SEARCHED (IPC)** G01H G01M |

-/--

The present search report has been drawn up for all claims

| Place of search | Date of completion of the search | Examiner |
|---|---|---|
| The Hague | 17 May 2024 | Sartoni, Giovanni |

EPO FORM 1503 03.82 (P04C01)

Europäisches
Patentamt

European
Patent Office

Office européen
des brevets

**EUROPEAN SEARCH REPORT**

Application Number

EP 24 15 0466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/230555 A1 (CERNY VACLAV [CZ] ET AL) 21 August 2014 (2014-08-21) * paragraphs [0030] - [0050] * * figures 1-9 * ----- | 1-7 | |
| | | | **TECHNICAL FIELDS SEARCHED (IPC)** |

The present search report has been drawn up for all claims

| Place of search | Date of completion of the search | Examiner |
|---|---|---|
| The Hague | 17 May 2024 | Sartoni, Giovanni |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 .......................................................................................
& : member of the same patent family, corresponding
document

EPO FORM 1503 03.82 (P04C01)

**ANNEX TO THE EUROPEAN SEARCH REPORT**

**ON EUROPEAN PATENT APPLICATION NO.**　　　EP 24 15 0466

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | Publication date | Patent family member(s) | | Publication date |
|---|---|---|---|---|
| US 2012035885 A1 | 09-02-2012 | EP | 2399104 A1 | 28-12-2011 |
| | | ES | 2397084 T3 | 04-03-2013 |
| | | US | 2012035885 A1 | 09-02-2012 |
| | | WO | 2010094915 A1 | 26-08-2010 |
| US 2014230555 A1 | 21-08-2014 | CZ | 306833 B6 | 02-08-2017 |
| | | EP | 2746541 A2 | 25-06-2014 |
| | | PL | 2746541 T3 | 30-05-2018 |
| | | US | 2014230555 A1 | 21-08-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120022805 A1
- US 2003042861 A1
- WO 2008049167 A1
- EP 1014054 B1

**Non-patent literature cited in the description**

- **ANGELA MEYER**. *Vibration Fault Diagnosis in Wind Turbines Based on Automated Feature Learning*, 2022